# DEMANDE DE BREVET EUROPEEN

(11) **EP 4 838 499 A1**
(43) Date de publication de la demande: **11.11.2026**
(21) Numéro de dépôt: 26176857.6
(22) Date de dépôt: 06.05.2026
(51) Int. Cl.: G08G 1/01, B60W 50/14, G08G 1/0967

(54) **PROCÉDÉ D'AGRÉGATION D'ALERTES DÉTECTANT LA SURVENUE D'UN ÉVÉNEMENT ROUTIER**

(30) Priorité: 06.05.2025 FR 2504798
(71) Demandeur: RENAULT s.a.s., 92100 Boulogne-Billancourt (FR)
(72) Inventeur: AZZAZ, Bilel, 78084 GUYANCOURT (FR)
(74) Mandataire: Renault Group

(57) **Abrégé**

Un aspect de l'invention concerne un procédé d'agrégation d'alertes détectant la survenue d'un événement routier, comportant une première itération et au moins une deuxième itération chacune associée à une condition de traitement, à un rayon et à un seuil, comprenant les étapes suivantes :
- Pour chaque alerte répondant à la condition de traitement, traitement de ladite alerte comprenant :
- Si le nombre d'alertes associées à une position comprise dans un cercle (401) présentant le rayon associé et centré sur la position associée à l'alerte traitée, dite alerte voisine, comporte un nombre d'alertes supérieur au seuil, création d'un groupe (402) comprenant l'alerte et chaque alerte voisine, et ajout de l'alerte traitée à un ensemble d'alertes ;
- Pour chaque alerte voisine, traitement de ladite alerte comprenant, si le nombre d'alertes associée à une position comprise dans un cercle (401) présentant le rayon associé et centré sur la position associée à ladite alerte voisine, comporte un nombre d'alertes supérieur au seuil, ajout dans le groupe (402), de chaque alerte répondant à la condition et ajout de l'alerte voisine à l'ensemble d'alertes ;

une alerte répondant à la condition de traitement de la première itération si l'alerte n'a pas été traitée et à la condition de traitement de la deuxième itération si l'alerte n'appartient pas à l'ensemble d'alertes, le rayon de la deuxième itération étant supérieur ou égal au rayon de la première itération et le seuil de la deuxième itération étant inférieur ou égal au seuil de la première itération.

## Description

### DOMAINE TECHNIQUE DE L'INVENTION

Le domaine technique de l'invention est celui de la détection d'événements routiers pour les véhicules, et plus particulièrement celui de l'agrégation d'alertes détectant la survenue d'un événement routier.

La présente invention concerne un procédé d'agrégation d'une pluralité d'alertes parmi un ensemble d'alertes et en particulier un procédé d'agrégation d'une pluralité d'alertes parmi un ensemble d'alertes détectant la survenue d'un événement routier. La présente invention concerne également un procédé de détection, un procédé de prise en compte, un véhicule et un produit-programme d'ordinateur associés.

### ARRIERE-PLAN TECHNOLOGIQUE DE L'INVENTION

La détection des évènements routiers ou « local hasards » en anglais, tels que les accidents, les bouchons ou encore les routes glissantes, revêt une importance primordiale en ce qui concerne la sécurité des usagers, ces événements pouvant engendrer des situations de danger pour les utilisateurs de la route.

Les détections, remontées sous forme d'alertes, proviennent de diverses sources utilisant des technologies différentes et les événements routiers possédant une nature spatio-temporelle dynamique, un même événement routier correspond la plupart du temps à plusieurs alertes qu'il faut donc agréger pour assurer une remontée d'informations pertinente à destination des conducteurs susceptibles de rencontrer ledit événement routier.

Cependant, tous les événements routiers n'ont pas la même dynamique temporelle et spatiale, par exemple un événement routier de type accident ou véhicule en panne peut voir son signalement s'intensifier progressivement tandis qu'un obstacle sur la route disparaît généralement plus rapidement, et une agrégation basée sur des règles fixes n'est donc pas satisfaisante dans la majorité des cas.

Il existe donc un besoin d'agréger toutes les alertes relatives à un même événement routier pour ne faire qu'une unique remontée d'informations pertinente aux conducteurs concernés par ledit événement routier et ainsi éviter de les alerter de manière intempestive.

### RESUME DE L'INVENTION

L'invention offre une solution aux problèmes évoqués précédemment, en permettant d'informer de manière pertinente et non intempestive les conducteurs susceptibles de rencontrer un événement routier détecté.

Un premier aspect de l'invention concerne un procédé d'agrégation d'alertes parmi un ensemble d'alertes, chaque alerte détectant la survenue d'un événement routier dans un environnement routier et étant associée à une position dans l'environnement routier et à un instant compris dans une période temporelle prédéfinie, le procédé comportant une première itération et au moins une deuxième itération, chaque itération étant associée à une condition de traitement, à un rayon et à un seuil, et comprenant les étapes suivantes :
- Pour chaque alerte de l'ensemble d'alertes répondant à la condition de traitement associée, traitement de ladite alerte comprenant :
   - Si le nombre d'alertes de l'ensemble d'alertes répondant à une première condition de proximité, dite alerte voisine, comporte un nombre d'alertes supérieur au seuil associé, création d'un groupe d'alertes comprenant l'alerte traitée et chaque alerte voisine, et ajout de l'alerte traitée à un ensemble d'alertes, dit ensemble d'alertes centrales, une alerte donnée répondant à la première condition de proximité si l'alerte donnée est associée à une position comprise dans un cercle présentant le rayon associé et centré sur la position associée à l'alerte traitée ;
   - Pour chaque alerte voisine, traitement de ladite alerte voisine comprenant, si le nombre d'alertes de l'ensemble d'alertes répondant à une deuxième condition de proximité, comporte un nombre d'alertes supérieur au seuil associé, ajout dans le groupe créé, de chaque alerte répondant à la deuxième condition de proximité et ajout de l'alerte voisine à l'ensemble d'alertes centrales, une alerte donnée répondant à la deuxième condition de proximité si l'alerte donnée est associée à une position comprise dans un cercle présentant le rayon associé et centré sur la position associée à ladite alerte voisine ;
une alerte donnée répondant à la condition de traitement associée à la première itération si l'alerte donnée n'a pas été traitée, une alerte donnée répondant à la condition de traitement associée à la deuxième itération si l'alerte donnée n'appartient pas à l'ensemble d'alertes centrales, le rayon associé à la deuxième itération étant supérieur ou égal au rayon associé à la première itération et le seuil associé à la deuxième itération étant inférieur ou égal au seuil associé à la première itération.

Grâce à l'invention, les alertes sont agrégées sur la base de leur position dans l'environnement routier et certains paramètres d'agrégation sont modifiés à chaque itération. Ce procédé permet une meilleure définition des frontières spatiales des événements routiers et est particulièrement efficace dans les zones très étendues ou présentant une forte densité d'alertes.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles.

Selon une variante de réalisation, chaque alerte de l'ensemble d'alertes est associée à un même type d'événement routier, et le nombre de deuxièmes itérations et/ou le seuil associé à chaque itération et/ou la période temporelle prédéfinie dépend du type d'événement routier associé.

Ainsi, certains paramètres d'agrégation dépendent du type d'événement routier détecté, ce qui permet de prendre en compte la dynamique spatiale particulière propre à chaque type d'événement routier.

Selon une variante de réalisation compatible avec la variante de réalisation précédente, le procédé selon le premier aspect de l'invention comporte pour chaque deuxième itération, une étape initiale de calcul du rayon associé.

Selon une sous-variante de réalisation des deux variantes de réalisation précédentes, le rayon associé dépend de la densité spatiale d'au moins un groupe créé, du type d'événement routier associé et de données relatives à l'environnement routier.

Selon une alternative de réalisation de la sous-variante de réalisation précédente, le rayon εₙ associé à la n-ème deuxième itération vaut : ${ε}_{n} = {ε}_{i} \left(1+\frac{σ}{ρ}\right) \times \left(1+kD\right)$ Avec :
- εᵢ le rayon associé à la première itération ;
- ρ la densité spatiale d'un groupe créé ;
- σ l'écart-type des distances entre les alertes comprises dans le groupe créé ;
- D la distance moyenne entre les alertes comprises dans le groupe créé ;
- k un coefficient fonction du type d'événement routier associé et des données relatives à l'environnement routier.

Ainsi, la valeur de rayon utilisé comme paramètre d'agrégation est adaptée en fonction des caractéristiques spatiales du groupe d'alertes créé d'une part, et de données relatives à l'environnement routier d'autre part. La prise en compte de l'environnement permet notamment de pénaliser l'évolution de la valeur du rayon si des éléments de contexte suggère que l'événement routier à détecter est limité géographiquement, par exemple la présence d'un feu tricolore suggère que la localisation d'un événement routier correspondant sera forcément en amont dudit feu.

Selon une variante de réalisation compatible avec les variantes de réalisation précédentes, le procédé selon le premier aspect de l'invention comporte en outre une étape finale de fusion d'au moins une partie des groupes créés prenant en compte des données relatives à l'environnement routier, pour obtenir au moins un groupe d'alertes final.

Ainsi, les groupes d'alertes sont fusionnés pour correspondre à un unique événement routier et cette fusion dépend de l'environnement, ce qui permet de réduire le nombre de fausses agrégations.

Un deuxième aspect de l'invention concerne un procédé de détection de la survenue d'au moins un événement routier dans un environnement routier, comportant les étapes du procédé selon le premier aspect de l'invention, et une étape de création d'un événement routier pour chaque groupe d'alertes final obtenu, chaque événement routier créé étant associé à une zone géographique englobant chaque position associée à une alerte comprise dans le groupe d'alertes final correspondant.

Un troisième aspect de l'invention concerne un procédé de prise en compte au sein d'un véhicule, d'un événement routier, comportant les étapes du procédé selon le deuxième aspect de l'invention, et une étape d'émission à destination du conducteur, d'une information relative à l'événement routier créé, et/ou une étape de prise en compte dudit événement routier créé par au moins une fonction d'aide à la conduite si ledit véhicule se situe dans ou à proximité de la zone géographique associée à l'événement routier créé.

Un quatrième aspect de l'invention concerne un véhicule comportant des moyens pour mettre en œuvre le procédé selon le premier, le deuxième ou le troisième aspect de l'invention.

Un cinquième aspect de l'invention concerne un produit programme d'ordinateur comprenant des instructions qui, lorsque le programme est exécuté par un ordinateur, conduisent celui-ci à mettre en œuvre les étapes du procédé selon le premier, le deuxième ou le troisième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé d'agrégation selon l'invention.
- La figure 2 montre une représentation schématique d'une première itération du procédé d'agrégation selon l'invention, pour un événement routier de type embouteillage.
- La figure 3 montre une représentation schématique d'une deuxième itération du procédé d'agrégation selon l'invention, pour l'événement routier de type embouteillage de la figure 2.
- La figure 4 montre une représentation schématique d'une troisième étape du procédé d'agrégation selon l'invention, pour deux événements routiers de type embouteillage.
- La figure 5 est un schéma synoptique illustrant l'enchaînement des étapes d'un procédé de détection selon l'invention.
- La figure 6 est un schéma synoptique illustrant l'enchaînement des étapes d'un procédé de prise en compte selon l'invention.

### DESCRIPTION DETAILLEE

Sauf précision contraire, un même élément apparaissant sur des figures différentes présente une référence unique.

Un premier aspect de l'invention concerne un procédé d'agrégation d'alertes parmi un ensemble d'alertes détectant chacune la survenue d'un événement routier.

L'agrégation permet de former au moins un groupe d'alertes regroupant toutes les alertes détectant un même événement routier.

Un événement routier peut être de plusieurs types, par exemple de type accident, de type embouteillage, ou encore de type route glissante.

Une alerte est associée à un type d'événement routier correspondant au type de l'événement routier détecté par ladite alerte.

Une alerte est également associée à une position correspondant à la position à laquelle l'événement routier détecté par ladite alerte est survenu et à un instant correspondant à l'instant auquel l'alerte a été générée.

L'ensemble d'alertes comporte une pluralité d'alertes associées à un même type d'événement routier, à une position comprise dans un environnement routier donné et à un instant compris dans une période temporelle prédéfinie.

L'environnement routier donné est par exemple un tronçon routier, d'une longueur de quelques centaines de mètres.

La période temporelle prédéfinie dépend par exemple du type d'événement routier associé.

La période temporelle prédéfinie vaut par exemple une minute pour un événement routier de type embouteillage.

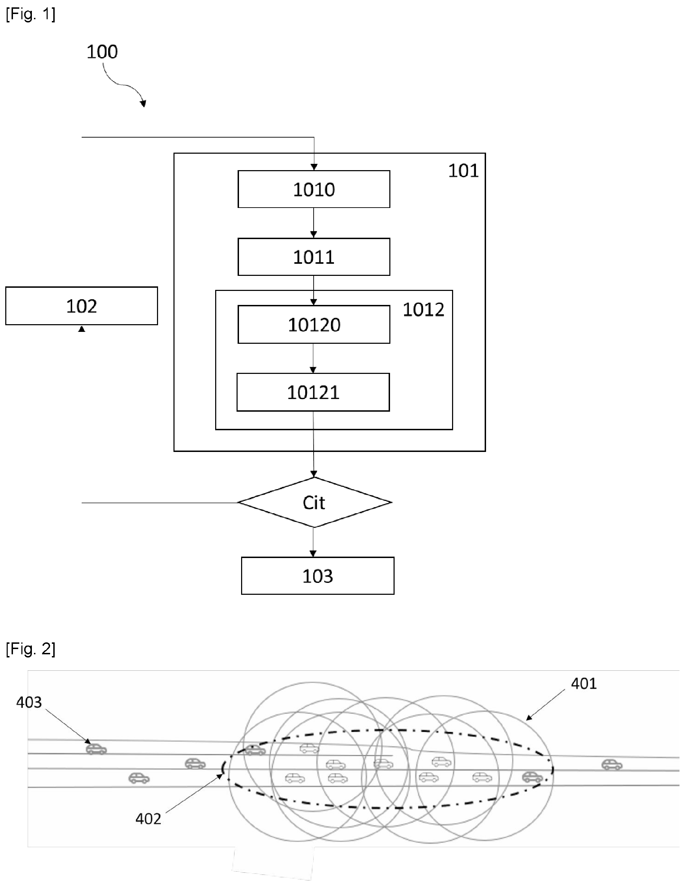

L'enchaînement des étapes du procédé 100 d'agrégation selon le premier aspect de l'invention est illustré sur la figure 1.

Le procédé 100 d'agrégation comporte une pluralité d'itérations et chaque itération de la pluralité d'itérations est associée à une condition de traitement, à un rayon et à un seuil.

Le rayon et/ou le seuil dépend par exemple du type d'événement routier associé à chaque alerte de l'ensemble d'alertes.

La pluralité d'itérations comporte une première itération et au moins une deuxième itération, suivant la première itération.

Le nombre de deuxièmes itérations dépend par exemple du type d'événement routier associé à chaque alerte de l'ensemble d'alertes.

Pour un événement routier de type embouteillage, le nombre de deuxièmes itérations vaut par exemple 3.

Le rayon associé à la deuxième itération est supérieur ou égal au rayon associé à la première itération et le seuil associé à la deuxième itération est inférieur ou égal au seuil associé à la première itération.

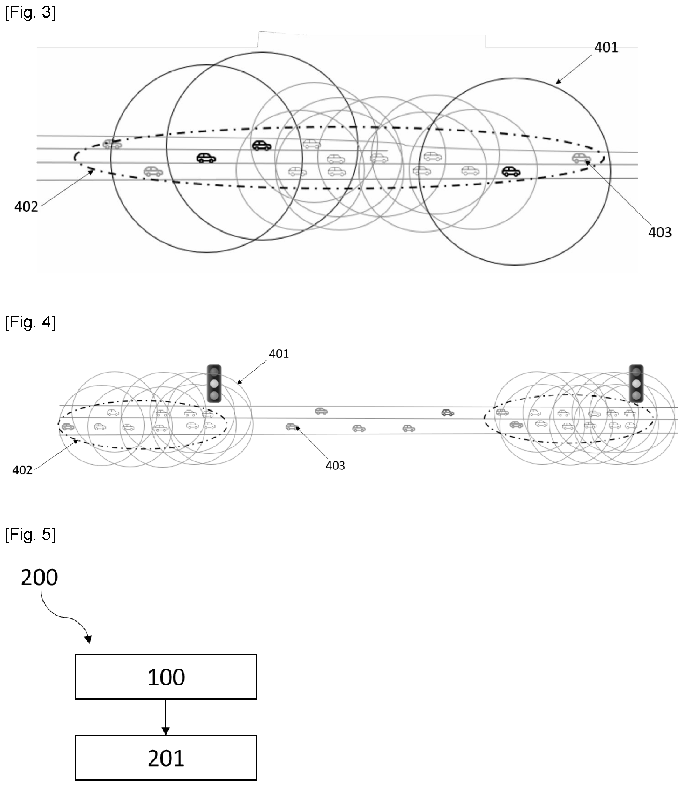

Sur la figure 2 est représentée schématiquement le résultat d'une première itération sur un événement routier de type embouteillage et sur la figure 3, le résultat d'une deuxième itération pour le même événement routier.

Lors de la première itération, le rayon était égal à 20 mètres et le seuil à 4.

Lors de la deuxième itération, le rayon était égal à 30 mètres et le seuil à 3.

Sur les figures 2 et 3, chaque véhicule 403 correspond à une alerte associée à la position dudit véhicule 403.

Chaque itération, c'est-à-dire la première itération et chaque deuxième itération, comporte une première étape 101 de traitement réalisée pour chaque alerte de l'ensemble d'alertes répondant à la condition de traitement associée à ladite itération.

Une alerte donnée répond à la condition de traitement associée à la première itération si l'alerte donnée n'a pas été traitée, c'est-à-dire n'a pas subi d'étape de traitement comme la première étape 101 ou une troisième sous-étape 1012 de la première étape 101 qui sera décrite ultérieurement.

Une alerte donnée répond à la condition de traitement associée à la deuxième itération si l'alerte donnée n'appartient pas à un ensemble d'alertes centrales qui sera décrit ultérieurement.

Une première sous-étape 1010 et une deuxième sous-étape 1011 de la première étape 101 sont réalisées si le nombre d'alertes de l'ensemble d'alertes répondant à une première condition de proximité est supérieur au seuil associé à ladite itération.

Une alerte répond à la première condition de proximité si ladite alerte est associée à une position comprise dans un cercle 401 présentant le rayon associé à ladite itération et centré sur la position associée à l'alerte en cours de traitement.

Une alerte répondant à la première condition de proximité est appelée alerte voisine.

La première sous-étape 1010 consiste à créer un groupe 402 d'alertes comprenant l'alerte en cours de traitement et chaque alerte voisine.

La deuxième sous-étape 1011 consiste à ajouter l'alerte en cours de traitement à un ensemble d'alertes, dit ensemble d'alertes centrales.

L'ensemble d'alertes centrales est initialement vide.

Une troisième sous-étape 1012 de la première étape 101 est réalisée pour chaque alerte voisine et consiste à traiter ladite alerte voisine.

Une première sous-étape 10120 et une deuxième sous-étape 10121 de la troisième sous-étape 1012 sont réalisées si le nombre d'alertes de l'ensemble d'alertes répondant à une deuxième condition de proximité est supérieur au seuil associé à ladite itération.

Une alerte répond à la deuxième condition de proximité si ladite alerte est associée à une position comprise dans un cercle 401 présentant le rayon associé à ladite itération et centré sur la position associée à ladite alerte voisine.

La première sous-étape 10120 consiste à ajouter au groupe 402 d'alertes créé lors de la première sous-étape 1010, chaque alerte répondant à la deuxième condition de proximité.

La deuxième sous-étape 10121 consiste à ajouter ladite alerte voisine à l'ensemble d'alertes centrales.

Sur la figure 2 est représenté en pointillés l'unique groupe 402 d'alertes créé lors de la première itération et chaque cercle 401 ayant entraîné l'ajout d'une alerte dans ledit groupe 402 créé.

On constate sur la figure 3, que ledit groupe 402 créé s'est élargi lors de la deuxième itération grâce à l'utilisation de cercles 401 ayant un rayon plus élevé que celui des cercles 401 utilisés lors de la première itération.

Selon une première alternative de réalisation, chaque deuxième itération est associée à un rayon prédéfini.

Selon une deuxième alternative de réalisation, chaque deuxième itération comporte une étape 102 initiale de calcul du rayon associé à ladite deuxième itération, c'est-à-dire que ladite étape est réalisée avant la première étape 101 pour ladite deuxième itération.

Le rayon calculé dépend par exemple de la densité spatiale d'au moins un groupe créé lors de la première itération ou lors d'une deuxième itération ayant précédé ladite deuxième itération, du type d'événement routier associé à chaque alerte de l'ensemble d'alertes et de données relatives à l'environnement routier.

Le rayon calculé dépend par exemple de la densité spatiale du groupe créé lors de la première itération ou lors d'une deuxième itération ayant précédé ladite deuxième itération ayant la plus forte densité spatiale.

Les données relatives à l'environnement routier comportent par exemple les caractéristiques topographiques des routes, les tracés des routes, les voies de circulation, les intersections, les ronds-points, les péages, les panneaux de signalisation, les feux de circulation, et/ou les marquages au sol.

Le rayon εₙ associé à la n-ème deuxième itération vaut : ${ε}_{n} = {ε}_{i} \left(1+\frac{σ}{ρ}\right) \times \left(1+kD\right)$ Avec :
- εᵢ le rayon associé à la première itération ;
- ρ la densité spatiale
- dudit groupe créé ;
- σ l'écart-type des distances entre les alertes comprises dans ledit groupe créé;
- D la distance moyenne entre les alertes comprises dans le groupe créé ;
- k un coefficient fonction du type d'événement routier associé et des données relatives à l'environnement routier.

Une troisième étape 103 du procédé 100 d'agrégation selon le premier aspect de l'invention est réalisée dès qu'une condition Cit selon laquelle le nombre de deuxièmes itérations prédéfini a été réalisé est vérifiée.

La troisième étape 103 consiste à fusionner au moins une partie des groupes 402 créés lors des itérations réalisées, pour obtenir au moins un groupe 402 d'alertes final.

La troisième étape 103 prend par exemple en compte des données relatives à l'environnement routier pour éviter de fusionner des groupes créés si le contexte routier suggère que les deux groupes 402 d'alertes créés ne peuvent pas correspondre à un même événement routier. Un tel exemple est illustré schématiquement sur la figure 4.

Sur la figure 4, à l'issue des itérations, deux groupes d'alertes 402 représentés en pointillés ont été créés. La présence des deux feux tricolores suggère la présence de deux événements routiers distincts et la fusion des deux groupes 402 n'est donc pas réalisée.

Un deuxième aspect de l'invention concerne un procédé 200 de détection de la survenue d'au moins un événement routier dans l'environnement routier donné, et dont l'enchaînement des étapes est illustré schématiquement sur la figure 5.

Le procédé 200 de détection selon le deuxième aspect de l'invention comporte les étapes du procédé d'agréation selon le premier aspect de l'invention, puis une étape 201 de création d'un événement routier pour chaque groupe 402 d'alertes final obtenu à l'issue de la troisième étape 103.

Chaque événement routier créé est associé à une zone géographique englobant chaque position associée à une alerte comprise dans le groupe 402 d'alertes final correspondant.

Dans l'exemple des figures 2 et 3, un événement routier de type embouteillage est créé et associée à la zone géographique correspondant à la couverture géographique du groupe 402 final de la figure 3.

Dans l'exemple de la figure 4, deux événements routiers de type embouteillage sont créés et associés à la zone géographique correspondant à la couverture géographique du groupe 402 final correspondant.

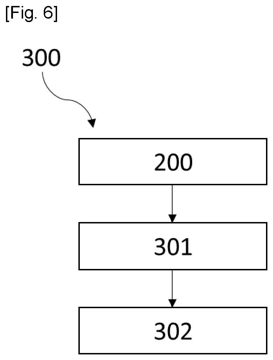

Un troisième aspect de l'invention concerne un procédé 300 de prise en compte au sein d'un véhicule 403, d'un événement routier, et dont l'enchaînement des étapes est illustré schématiquement sur la figure 6.

Le procédé 300 de prise en compte selon le troisième aspect de l'invention comporte les étapes du procédé 200 de détection selon le deuxième aspect de l'invention.

Le procédé 300 selon le troisième aspect de l'invention peut comporter une étape 301 d'émission à destination d'un conducteur du véhicule 403, d'une information relative à l'événement routier créé à l'issue du procédé 200 de détection selon le deuxième aspect de l'invention.

L'étape 301 d'émission d'une information peut consister en l'affichage d'un message d'alerte sur un écran du véhicule 403 ou l'émission d'un signal d'alerte sonore via un microphone du véhicule 403.

Le procédé 300 selon le troisième aspect de l'invention peut comporter une étape 302 de prise en compte de l'événement routier créé à l'issue du procédé 200 de détection selon le deuxième aspect de l'invention, par au moins une fonction d'aide à la conduite.

Les étapes 301 d'émission et 302 de prise en compte sont par exemple réalisées si ledit véhicule 403 est localisé dans ou à proximité de la zone géographique associée audit événement routier.

## Revendications

1. Procédé (100) d'agrégation d'alertes parmi un ensemble d'alertes, chaque alerte détectant la survenue d'un événement routier dans un environnement routier et étant associée à une position dans l'environnement routier et à un instant compris dans une période temporelle prédéfinie, le procédé (100) comportant une première itération et au moins une deuxième itération, chaque itération étant associée à une condition de traitement, à un rayon et à un seuil, et comprenant les étapes suivantes :
- Pour chaque alerte de l'ensemble d'alertes répondant à la condition de traitement associée, traitement (101) de ladite alerte comprenant :
- Si le nombre d'alertes de l'ensemble d'alertes répondant à une première condition de proximité, dite alerte voisine, comporte un nombre d'alertes supérieur au seuil associé, création (1010) d'un groupe (402) d'alertes comprenant l'alerte traitée et chaque alerte voisine, et ajout (1011) de l'alerte traitée à un ensemble d'alertes, dit ensemble d'alertes centrales, une alerte donnée répondant à la première condition de proximité si l'alerte donnée est associée à une position comprise dans un cercle (401) présentant le rayon associé et centré sur la position associée à l'alerte traitée ;
- Pour chaque alerte voisine, traitement (1012) de ladite alerte voisine comprenant, si le nombre d'alertes de l'ensemble d'alertes répondant à une deuxième condition de proximité, comporte un nombre d'alertes supérieur au seuil associé, ajout (10120) dans le groupe (402) créé, de chaque alerte répondant à la deuxième condition de proximité et ajout (10121) de l'alerte voisine à l'ensemble d'alertes centrales, une alerte donnée répondant à la deuxième condition de proximité si l'alerte donnée est associée à une position comprise dans un cercle (401) présentant le rayon associé et centré sur la position associée à ladite alerte voisine ;
une alerte donnée répondant à la condition de traitement associée à la première itération si l'alerte donnée n'a pas été traitée, une alerte donnée répondant à la condition de traitement associée à la deuxième itération si l'alerte donnée n'appartient pas à l'ensemble d'alertes centrales, le rayon associé à la deuxième itération étant supérieur ou égal au rayon associé à la première itération et le seuil associé à la deuxième itération étant inférieur ou égal au seuil associé à la première itération.

2. Procédé (100) selon la revendication précédente, dans lequel chaque alerte de l'ensemble d'alertes est associée à un même type d'événement routier, et le nombre de deuxièmes itérations et/ou le seuil associé à chaque itération et/ou la période temporelle prédéfinie dépend du type d'événement routier associé.

3. Procédé (100) selon l'une quelconque des revendications précédentes, comportant pour chaque deuxième itération, une étape (102) initiale de calcul du rayon associé.

4. Procédé (100) selon les revendications 2 et 3, dans lequel le rayon associé dépend de la densité spatiale d'au moins un groupe (402) créé, du type d'événement routier associé et de données relatives à l'environnement routier.

5. Procédé (100) selon la revendication précédente, dans lequel le rayon εₙ associé à la n-ème deuxième itération vaut : ${ε}_{n} = {ε}_{i} \left(1+\frac{σ}{ρ}\right) \times \left(1+kD\right)$ Avec :
- εᵢ le rayon associé à la première itération ;
- ρ la densité spatiale d'un groupe (402) créé ;
- σ l'écart-type des distances entre les alertes comprises dans le groupe (402) créé ;
- D la distance moyenne entre les alertes comprises dans le groupe (402) créé ;
- k un coefficient fonction du type d'événement routier associé et des données relatives à l'environnement routier.

6. Procédé (100) selon l'une quelconque des revendications précédentes, comportant en outre une étape (103) finale de fusion d'au moins une partie des groupes (402) créés prenant en compte des données relatives à l'environnement routier, pour obtenir au moins un groupe (402) d'alertes final.

7. Procédé (200) de détection de la survenue d'au moins un événement routier dans un environnement routier, comportant les étapes du procédé d'agréation selon la revendication 6, et une étape (201) de création d'un événement routier pour chaque groupe (402) d'alertes final obtenu, chaque événement routier créé étant associé à une zone géographique englobant chaque position associée à une alerte comprise dans le groupe (402) d'alertes final correspondant.

8. Procédé (300) de prise en compte au sein d'un véhicule (403), d'un événement routier, comportant les étapes du procédé de détection selon la revendication précédente, et une étape (301) d'émission à destination du conducteur, d'une information relative à l'événement routier créé, et/ou une étape (302) de prise en compte dudit événement routier créé par au moins une fonction d'aide à la conduite si ledit véhicule (403) se situe dans ou à proximité de la zone géographique associée à l'événement routier créé.

9. Véhicule (403) comportant des moyens pour mettre en œuvre le procédé (100, 200, 300) selon l'une quelconque des revendications précédentes.

10. Produit programme d'ordinateur comprenant des instructions qui, lorsque le programme est exécuté par un ordinateur, conduisent celui-ci à mettre en œuvre les étapes du procédé (100, 200, 300) selon l'une quelconque des revendications 1 à 8.
